# EUROPEAN PATENT APPLICATION

(11) **EP 1 047 015 A2**
(43) Date of publication of application: **25.10.2000**
(21) Application number: 00108624.8
(22) Date of filing: 20.04.2000
(51) Int. Cl.: G06K 19/077

(54) **ID tag using electromagnetic waves**

(30) Priority: 21.04.1999 JP 11383499
(71) Applicant: Haneda Humepipe Co., Ltd., Tokyo (JP)
(72) Inventor: Fujii, Takashi, c/o Haneda Humepipe Co., Ltd., Tokyo (JP); Namioka, Hironori, c/o Haneda Humepipe Co., Ltd., Tokyo (JP)
(74) Representative: Patentanwälte Westphal, Mussgnug & Partner

(57) **Abstract**

An ID tag and a reading and writing terminal constitute an RF-ID tag system. A power supply device of the ID tag is constituted of an element of a solar cell, an electric double layer condenser, and a diode for preventing countercurrents. Signals are exchanged between the ID tag and the reading and writing terminal via antenna coils, and the ID tag includes a transmitting and receiving decoder, a data memory, a transmitting and receiving amplifier, an SW control device and an LED display light as a function display device. The LED display light is structured to display self-diagnosis results of a self-diagnosis function device constituted of a transmitting and receiving operation-acceptance or rejection judgment section, an installation and underground laying condition-acceptance or rejection judgment section, and an ambient noise disturbance-acceptance or rejection judgment section. The ID tag using electromagnetic waves thus structured can make sensitivity up and perform remote communications.

## Description

### CROSS-REFERENCE TO RELATED APPLICATION

This application claims priority benefit under 35 U.S.C. 119 of the patent application Heisei No. 11-113,834 filed in Japan on April 21, 1999.

### BACKGROUND OF THE INVENTION

### 1.Field of the Invention

This invention relates to an ID tag (identity-tag) using electromagnetic waves.

### 2.Description of Related Art

In recent years, an ID tag using electromagnetic waves of radio frequency (RF) (hereinafter referred to as "RF-ID tag") has been used, which memorizes information on contents of articles, surrounding situations or the like in an internal memory of the ID tag, and reads and writes the above information with an external reading and writing terminal, thus to be used as a confirmation means of the contents.

Particularly, an ID tag for road installation has been proposed by the present assignee, and the ID tag, laid underground at predetermined intervals at the side of the road, includes data of the locations and contents of the underground facilities inputted and recorded by the reading and writing terminal. The data are updated when communication networks, water-supply and sewage systems or the like are newly installed underground. The data are read by the reading and writing terminal for using as a reference for underground constructions, or the data are read by the ID tag for understanding damaged situations of the disconnections, damages or the like of the communication network or the water-supply and sewerage systems when a disaster such as an earthquake occurs.

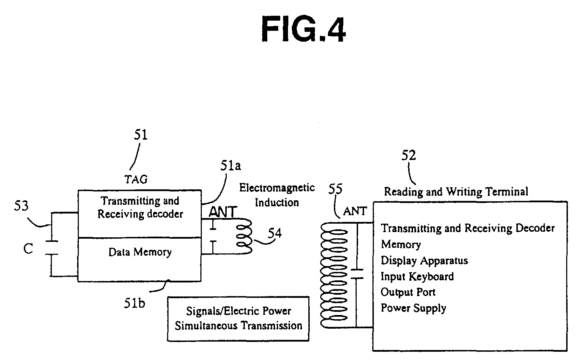

An electromagnetic induction method using the long or medium wave region from 50 kHz to 500 kHz, that is, radio frequency (RF) is well known as a data carrier method inputting and outputting of the information between ID tag and reading and writing terminal. An example of the ID tag used in the method is shown in Fig. 4. In Fig. 4, numerals 51, 52, and 53 refer respectively to an ID tag, a reading and writing terminal, and a power supply unit for the ID tag 51 constituted of a condenser.

Numerals 54, 55 respectively refer to antenna coils constituted of loop coils. The ID tag 51 includes a transmitting and receiving decoder 51a and a data memory 51b. The reading and writing terminal 52 includes a transmitting and receiving decoder, a memory, a display unit, an input keyboard, an output port and a power supply. The ID tag 51 and the reading and writing terminal 52 constitute an RF-ID tag system.

In the RF-ID tag system thus constituted, when data are inputted, the reading and writing terminal 52 is operated to transmit, from the antenna coil 55 to the ID tag 51, an electric power for the power supply of the tag by using electromagnetic inductive waves, and then the power is received by transmitting and receiving decoder 51a to charge a condenser 53 as a power supply unit; by using the power at the same time, data signals transmitted simultaneously from the reading and writing terminal 52 are received by the transmitting and receiving decoder 51a to be stored in the data memory 51b.

When data are outputted, in the same way as inputting the data, the reading and writing terminal 52 is operated to transmit the electric power for the power supply from antenna coil 55 to the ID tag 51 by using the electromagnetic inductive waves, and the power is received by the transmitting and receiving decoder 51a to charge the condenser 53 as the power supply unit. By using the power at the same time, data reading signals transmitted simultaneously from the reading and writing terminal 52 are received by the transmitting and receiving decoder 51a, thereby reading designated data from the data stored in the data memory 51b, storing the data in the memory of the reading and writing terminal 52, displaying on a display unit and outputting by the output port.

The power supply of the ID tag 51 according to the conventional RF-ID tag system is, however, constituted of the condenser 53 only, and the conventional RF-ID tag system has following problems such as: output of the electromagnetic inductive waves is weak and short due to smaller power supply capacity; large antenna coils 54, 55 are required for transmitting the electric power for the power supply to the ID tag 51 by using electromagnetic waves, and the weights of those coils are heavy; the spacing distant between the ID tag 51 and the reading and writing terminal 52 is limited to approximately 20 cm at the most; and the ID tag 51 has no display function by itself, or the like.

### SUMMARY OF THE INVENTION

In consideration of the above problems, it is an object of the invention to provide an RF-ID tag including an independent power supply constituted of a solar cell and an electric double layer condenser as a power supply of the ID tag of the RF-ID tag system, thus to be capable of making sensitivity up and making remote communications, a display function such as an LED (light emission diode) display light, and a self-diagnosis function.

To accomplish the above objects, an ID tag using electromagnetic waves according to the invention, including at least a power supply, a transmitting and receiving decoder and a data memory in a housing and operating communications by the specific electromagnetic signals, is so structured as to include an independent power supply constituted of a solar cell and an electric double layer condenser as well as allow communications by specific electromagnetic wave signals with the power from the independent power supply.

Consequently, because the solar cell constantly outputs electric power even in wet weather or in sun shade and stores the power in the electric double layer condenser, the ID tag of the invention can have quite a large capacity when compared to the conventional ID tag, allows to perform amplification by the use of a transmitting and receiving amplifier, and make sensitivity up. Also, since the data to be transmitted are constituted of signals only, the transmitting and receiving operation can be secured that is sufficiently enough even in the case where the spacing distance between the ID tag and the reading and writing terminal is one meter or more.

The ID tag using electromagnetic waves according the invention, including at least the power supply, the transmitting and receiving decoder and the data memory in the housing and operating communications by the specific electromagnetic wave signals, is so structured as to include an independent power supply constituted of a solar cell and an electric double layer condenser, allow communications by specific electromagnetic wave signals with the power energy from the independent power supply, and further include an independent function display device run by the electric power energy from the independent power supply.

Thus, the independent power supply constituted of a solar cell having quite a large capacity in comparison with that of conventional ID tag can be realized, so this electric power energy can activate the independent function display device.

The ID tag using electromagnetic waves according to the invention, including at least the power supply, the transmitting and receiving decoder and the data memory in the housing and operating communications by the specific electromagnetic signals, is so structured as to include an independent power supply constituted of a solar cell and an electric double layer condenser, allow communications by specific electromagnetic wave signals with the power energy from the independent power supply, and further include an independent self-diagnosis device run by the electric power energy from the independent power supply; or the ID tag using electromagnetic waves is so structured as to include an independent power supply constituted of a solar cell and an electric double layer condenser, allow communications by specific electromagnetic wave signals with the electric power energy from the independent power supply, and include an independent function display device run by the electric power energy from the independent power supply and also an independent self-diagnosis display device run by the electric power energy from the independent power supply.

Thus, the independent power supply constituted of a solar cell having quite a large capacity in comparison with that of the prior art can be realized, so this electric power energy can run a detection diagnosis means, that is such an independent self-diagnosis function device as a transmitting and receiving operation-acceptance or rejection judgment section, an installation and underground laying condition-acceptance or rejection judgment section and an ambient noise disturbance-acceptance or rejection judgment section.

The ID tag using electromagnetic waves according to the invention, including at least the power supply, the transmitting and receiving decoder and the data memory in the housing and performing communication by the specific electromagnetic signals, is so structured as to include an independent power supply constituted of a solar cell and an electric double layer condenser, allow communications by specific electromagnetic wave signals with the power energy from the independent power supply, and include an independent function display device run by the electric power energy from the independent power supply, the function display device showing the information data from the self-diagnosis function device and the information data of the specific electromagnetic wave signal communications.

Therefore, the function display device can show external situations judged by the self-diagnosis function device, or the information data on the transmitting and receiving operation-acceptance or rejection judgment, the installation and underground laying condition-acceptance or rejection judgment, and the ambient noise disturbance-acceptance or rejection judgment.

The ID tag using electromagnetic waves according to the invention, including at least the power supply, the transmitting and receiving decoder and the data memory in the housing and operating communications by the specific electromagnetic signals, is so structured as to include an independent power supply constituted of a solar cell and an electric double layer condenser, allow communications by specific electromagnetic wave signals with the power energy from the independent power supply, and include an independent function display device run by the electric power energy from the independent power supply, the function display device automatically operating flashing light for the site recognition at night.

Therefore, since the solar cell constantly outputs an electric power even in wet weather or in the shade and stores the power in the electric double layer condenser, the function display device can make the flashing lights automatically flashing for the site recognition at night.

The ID tag using electromagnetic waves according to the invention, including at least the power supply, the transmitting and receiving decoder and the data memory in a housing and operating communications by the specific electromagnetic signals, is so structured as to include an independent power supply constituted of a solar cell and an electric double layer condenser, allow communications by specific electromagnetic wave signals with the power energy from the independent power supply, and include an independent self-diagnosis function device run by the electric power energy from the independent power supply, the self-diagnosis function device including a detection diagnosis means for judging external situations, outputting the information data, displaying the data by the function display device, and allowing communications by the specific electromagnetic wave signals; or the ID tag using electromagnetic waves is so structured so as to include an independent power supply constituted of a solar cell and an electric double layer condenser, allow communications by specific electromagnetic wave signals with the electric power energy from the independent power supply, and include an independent function display device run by the electric power energy from the independent power supply and also an independent self-diagnosis function device run by the electric power energy from the independent power supply, the self-diagnosis function device including a detection diagnosis means for judging the external situation, outputting the information data, displaying the data by the function display device, and allowing communications by the specific electromagnetic wave signals.

Therefore, the function display device can show the external situations judged by the self-diagnosis function device, or the information data of the transmitting and receiving operation-acceptance or rejection judgment, the installation and underground laying condition-acceptance or rejection judgment, and the ambient noise disturbance-acceptance or rejection judgment.

An ID tag using electromagnetic waves according to the invention, including at least a power supply, a transmitting and receiving decoder and a data memory in a housing and operating communications by the specific electromagnetic signals, is so structured as to include an independent power supply constituted of a solar cell and an electric double layer condenser, an element of which solar cell is constructed so as to be securely attached to one side of the housing by molding with such as transparent resin, hard glass or the like.

Therefore, the element of the solar cell is molded by the transparent resin, hard glass or the like to one side of the housing containing the ID tag, thereby ensuring, at any time, electric power even in wet weather or in the shade by installing the side of the housing in a way of facing to the direction to which the sunbeam is coming.

As mentioned above, the ID tag using electromagnetic waves according to the invention has quite a large capacity in comparison with that of the prior art since the solar cell constantly outputs the electric power to store the power in the electric double layer condenser even in wet weather or in the shade, thus to be able to implement amplifications by the use of a transmitting and receiving amplifier as well as make the sensitivity of the ID tag up. Also, since the data to be transmitted are constituted of signals only, a transmitting and receiving operation can be secured that is sufficiently enough even in the case where the spacing distance between the ID tag and the reading and writing terminal is one meter or more, thereby realizing remote communications.

Because the independent power supply constituted of the solar cell having quite a large capacity in comparison with that of the conventional ID tag can be realized, this electric power energy can run an independent function display device, thereby running a detection diagnosis means for judging the external situations, that is, an independent self-diagnosis function devices such as a transmitting and receiving operation-acceptance or rejection judgment section, an installation and underground laying condition-acceptance or rejection judgment section and ambient noise disturbance-acceptance or rejection judgment section, and therefore, the function display device can show those diagnosis information data.

Furthermore, an element of the solar cell is molded by the transparent resin, hard glass or the like to one side of the housing containing the ID tag, and, by installing the side of the housing in a way of facing to the direction to which the sunbeam is coming, the solar cell constantly outputs the electric power even in wet weather or in the shade and stores the power into the electric double layer condenser, thereby allowing the function display device to make flashing light automatically flashing for the site recognition (confirmation) at night.

### BRIEF DESCRIPTION OF THE DRAWINGS

The above and other objects and features of the invention are apparent to those skilled in the art from the following referred embodiments thereof when considered in conjunction with the accompanied drawings, in which:
Fig. 1 is an illustration showing an RF-ID tag system to which an ID tag using electromagnetic waves according to the invention is applied;
Fig. 2 is an illustration showing the RF-ID tag system with the contents of the reading and writing terminal shown in greater detail;
Fig. 3 is a comparative list on respective items between the ID tag using electromagnetic waves according to the invention and a conventional ID tag;
Fig. 4 is an illustration explaining a conventional embodiment.

### DETAILED DESCRIPTION OF THE PREFERRED EMBODIMENTS

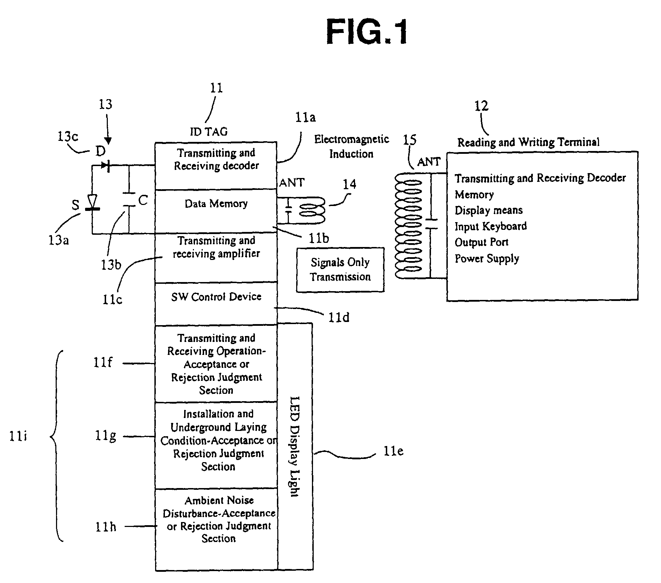

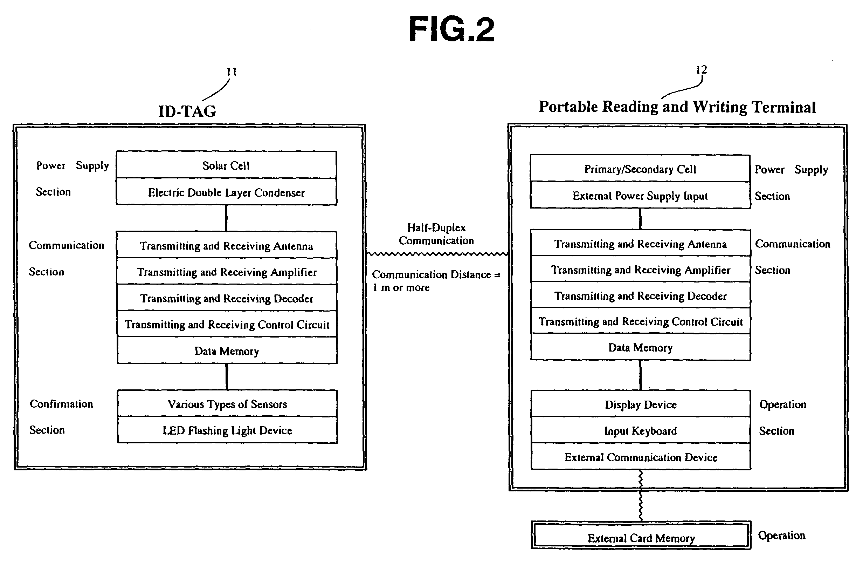

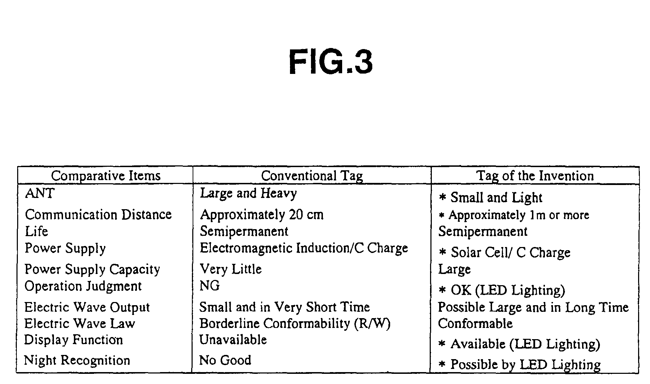

Referring to figures, an embodiment of an ID tag using electromagnetic waves of the invention is specifically explained. Fig. 1 is an illustration showing an RF-ID tag system to which an ID tag using electromagnetic waves according to the invention is applied. Fig. 2 is an illustration showing the RF-ID tag system with the contents of the reading and writing terminal shown in greater detail. Fig. 3 is a comparative list on respective items between the ID tag using electromagnetic waves according to the invention and a conventional ID tag. Fig. 4 is an illustration explaining a conventional embodiment.

Referring to Fig. 1, numeral 11 refers to an ID tag (identity-tag). Numeral 12 refers to a reading and writing terminal. Numeral 13 refers to a power supply device for the ID tag 11, the power supply device constituted of an element 13a of a solar cell, an electric double layer condenser 13b as a condenser, and a diode 13c for preventing countercurrents. Numeral 14, 15 refer to antenna coils constituted of loop coils or the like.

The ID tag 11 includes a transmitting and receiving decoder 11a, a data memory 11b as a memory means, a transmitting and receiving amplifier 11c, a SW (switching) control device 11d, and an LED (light emission diode) display light 11e as a function display device.

The displayed contents of the LED display light 11e as a function display device is self-diagnosis results of a self-diagnosis function device 11i consisting of a transmitting and receiving operation-acceptance or rejection judgment 11f an installation and underground laying condition-acceptance or rejection judgment 11g and an ambient noise disturbance-acceptance or rejection judgment 11h. The ID tag 11 is stored in a cylindrical or rectangular housing.

The reading and writing terminal 12 includes a transmitting and receiving decoder, a memory, a display means, an input keyboard, an output port and a power supply. Thus, the RF-ID tag system communicating between the ID tag 11 and the reading and writing terminal 12 by the use of specific electromagnetic wave signals is constituted.

Next, the working of the ID tag 11 is explained referring to Fig. 1. In the RF-ID tag system thus structured, when data are inputted, the reading and writing terminal 12 is, first, operated to transmit a command signal from the antenna coil 15, and then the SW (switching) control device 11d, by electromagnetic waves, at the ID tag 11 turns on the electric power switch of the independent power supply device 13 having the element 13a of the solar cell and the electric double layer condenser 13b. By utilizing the electric power from the independent power supply device 13, data signals to be transmitted to the ID tag 11 are received by the transmitting and receiving decoder 11a to be stored in the data memory 11b.

The ID tag 11 includes the LED display light lie as an independent function display device and the independent self-diagnosis function device run by the electric power energy from the independent power supply device 13, and the LED display light 11e can show the information data from the self-diagnosis function device and the information data of specific electromagnetic wave signal communications from the reading and writing terminal 12 as well.

The self-diagnosis function device can show, on the LED display light 11e, the information data from the detection diagnosis means for judging the external situations, that is, the transmitting and receiving operation-acceptance or rejection judgment section 11f, the installation and underground laying condition-acceptance or rejection judgment section 11g and the ambient noise disturbance-acceptance or rejection judgment section 11h, and the self-diagnosis function device can also communicate with the reading and writing terminal 12 by the specific electromagnetic wave signals. The LED display light 11e has a function to make the flashing light automatically flashing for the site recognition (confirmation) at night.

When data are outputted, the reading and writing terminal 12 is operated, by using the same way as in inputting the data, to transmit a command signal from the antenna coil 15 by the electromagnetic waves to be received by the transmitting and receiving decoder 11a. Therefore, the SW (switching) control device 11d turns on the switch so as to supply the ID tag 11 with the electric power from the independent power supply device 13 constituted of the element 13a of the solar cell and the electric double layer condenser 13b.

The ID tag 11 stores the data required for the acceptance or rejection judgment by the aforementioned self-diagnosis function device 11i of the transmitting and receiving operation-acceptance or rejection judgment section 11f, the installation and underground laying condition-acceptance or rejection judgment section 11g and the ambient noise disturbance-acceptance or rejection judgment section 11h, in which after the transmitting and receiving amplifier 11c amplifies the encoded information from the data memory 11b having the information region for code numbers (NO) which are cipher-encrypted and the communication auxiliary region for conducting error corrections or the like, the information is transmitted to the reading and writing terminal 12 via the transmitting and receiving decoder 11a.

In the case of the upper level products, the data memory 11b memorizes the encoded data such as the contents of the articles or the surrounding situations of the ID tag 11 placed thereto, and especially in the case of the ID tag 11 for the road installation, the locations or contents of the communication networks, the water-supply and sewage systems or the like. On the other hand, in the case of the products of simple version, the data memory 11b memorizes the required minimum data encoded such as numbers (NO) of the ID tag 11 or the like.

The element 13a of the solar cell is securely attached to one side of the housing containing the ID tag 11 by molding with transparent resin or hard glass or the like, and by installing the side in a way of making the side facing to the direction to which the sunbeam is coming, the electric power is constantly outputted and stored in the electric double layer condenser 13b even in wet weather or in the shade. Therefore, the tag has quite a large capacity in comparison with the that of the prior art, implements amplifications by using the transmitting and receiving amplifier 11c, and makes the sensitivity up. Furthermore, the data to be transmitted are constituted of signals only, the transmitting and receiving operation can be secured that is sufficiently enough even in the case where the spacing distance between the ID tag 11 and the reading and writing terminal 12 is one meter or more.

In the reading and writing terminal 12, the data signals transmitted from the transmitting and receiving decoder 11a are received by the transmitting and receiving decoder, and such data on the cipher-encrypted numbers (NO) of the ID tags 11, the information on the contents of the articles or the surrounding situations, and especially the locations, contents or the like of the communications or the water-supply and sewage systems in the case of the ID tags 11 for the road installation are recognized. Then the data are displayed together with the surrounding map or the facilities of the ID tag corresponding to the number (NO) of the ID tag 11 on the display device such as liquid crystal or the like.

The data relating to the ID tag 11 stored in the memory of the reading and writing terminal 12 can be received for use, if necessary, from a data center locating in another place via a communication line.

In the ID tag 11 especially for the road installation, the locations, contents or the like of the underground installed facilities such as communication network, the water-supply and the sewerage systems are displayed together with the map and the facilities, so such information provided by the tag can be used as a reference in road constructions or underground constructions, and the tag can rapidly gain the information on the damaged situations such as disconnections, damages or the like of the communication network or the water-supply and sewage systems during disasters such as earthquake. The information can be outputted from an output port to other equipments.

Next, referring to Fig. 2 showing the contents of the reading and writing terminal 12 more specifically, the embodiment of the RF-ID tag system with the ID tag using electromagnetic waves according to the invention is explained. The ID tag 11 in Fig. 2 is the same as that in Fig. 1, so the explanation is omitted.

This embodiment of the reading and writing terminal 12 is so structured as to be in use for the portable purpose, roughly composed of a power supply section, a communication section, and an operation section. The power supply section is constituted of a primary cell and a secondary cell, or of the external power supply input. The communication section is constituted of a transmitting and receiving antenna, a transmitting and receiving amplifier, a transmitting and receiving decoder, a transmitting and receiving control circuit, and a table memory. The operation section is constituted of a display device, an input keyboard, and an external communication device. As for the operation management, an external card memory, detachably used, for the security management is prepared.

A semiconductor memory, a HD (hard disc), a VHD (video hard disc), an MO (magneto-optic disc) or the like is use as the table memory, and the data including the color patterns of the map, facilities, marks or the like that correspond to the code number (NO) of the ID tag 11, and the data required for the arithmetic operations, renewals, communications or the like are stored as the information data, not mention the letter and numerical data. The exchange of the data signals between the ID tag 11 and the reading and writing terminal 12 thus structured is basically the same as that in Fig. 1, so the explanation is omitted.

The comparative results of the items between the ID tag using electromagnetic waves of the invention and the conventional ID tag are shown in the table in Fig. 3. It is clear that the ID tag of the invention is superior in almost all items of the functions to the conventional ID tag, and the operation property and the working efficiency can be quite improved in the field where the ID tag of the invention is used.

The foregoing description of preferred embodiments of the invention has been presented for purposes of illustration and description, and is not intended to be exhaustive or to limit the invention to the precise form disclosed. The description was selected to best explain the principles of the invention and their practical application to enable others skilled in the art to best utilize the invention in various embodiments and various modifications as are suited to the particular use contemplated. It is intended that the scope of the invention not be limited by the specification, but be defined claims set forth below.

## Claims

1. An ID tag using electromagnetic waves including at least a power supply, a transmitting and receiving decoder, and a data memory in a housing and operating communications by specific electromagnetic wave signals, wherein an independent power supply constituted of a solar cell and an electric double layer condenser is comprised, and wherein an electric power energy from the independent power supply allows communications by using the specific electromagnetic wave signals.

2. The ID tag using electromagnetic waves according to Claim 1, having at least the power supply, the transmitting and receiving decoder and the data memory in the housing and operating communications by specific electromagnetic wave signals, further comprising an independent power supply constituted of a solar cell and an electric double layer condenser as well as an independent function display device operated by electric power energy form the independent power supply.

3. The ID tag using electromagnetic waves according to Claim 1 or Claim 2, having at least the power supply, the transmitting and receiving decoder and the data memory in the housing and operating communications by specific electromagnetic wave signals, further comprising an independent power supply constituted of a solar cell and an electric double layer condenser as well as an independent self-diagnosis function device operated by electric power energy from the independent power supply.

4. The ID tag using electromagnetic waves according to Claim 2 and Claim 3, wherein said function display device shows information data from the self diagnosis function device and information data of the specific electromagnetic wave signal communications.

5. The ID tag using electromagnetic waves according to Claim 2, wherein said function display device has a function to automatically operate flashing light for site recognition at night.

6. The ID tag using electromagnetic waves according to Claim 2 or Claim 3, wherein said self-diagnosis function device comprises a detection diagnosis means for judging external situations, outputs the information data, displays by said function display device, and allows communications by the specific electromagnetic wave signals.

7. An ID tag using electromagnetic waves including at least a power supply, a transmitting and receiving decoder and a data memory in a housing and operating communications by specific electromagnetic wave signals, wherein an independent power supply constituted of a solar cell and an electric double layer condenser is comprised, and wherein an element of the solar cell is securely attached to one side of the housing by molding with transparent resin, hard glass or the like.
